# EUROPÄISCHE PATENTSCHRIFT

(11) **EP 1 587 848 B1**
(45) Veröffentlichungstag und Bekanntmachung des Hinweises auf die Patenterteilung: **26.07.2006**
(21) Anmeldenummer: 03795967.3
(22) Anmeldetag: 24.12.2003
(51) Int. Cl.: C08F 267/04, C11D 3/37, C08F 222/08, C08F 8/14

(54) **PARTIELL VERESTERTE COPOLYMERE VON MONOETHYLENISCH UNGESÄTTIGTEN DICARBONSÄUREANHYDRIDEN, VINYLAROMATISCHEN VERBINDUNGEN UND WEITERE HETEROATOME ENTHALTENDEN MONOETHYLENISCH UNGESÄTTIGTEN MONOMEREN**
PARTIALLY ESTERIFIED COPOLYMERS OF MONOETHYLENICALLY UNSATURATED DICARBOXYLIC ACID ANHYDRIDES, VINYLAROMATIC COMPOUNDS AND OTHER MONOETHYLENICALLY UNSATURATED MONOMERS CONTAINING HETEROATOMS
COPOLYMERES PARTIELLEMENT ESTERIFIES D'ANHYDRIDES D'ACIDE DICARBOXYLIQUE MONOETHYLENIQUEMENT INSATURES, DE COMPOSES VINYLAROMATIQUES ET D'AUTRES MONOMERES MONOETHYLENIQUEMENT INSATURES CONTENANT DES HETEROATOMES

(30) Priorität: 13.01.2003 DE 10301009
(43) Veröffentlichungstag der Anmeldung: 26.10.2005
(73) Patentinhaber: BASF Aktiengesellschaft, 67056 Ludwigshafen (DE)
(72) Erfinder: DETERING, Jürgen, 67117 Limburgerhof (DE); SCHNEIDER, Tanja, 64625 Bensheim (DE); KLÜGLEIN, Matthias, 67071 Ludwigshafen (DE); BAUM, Pia, 69469 Weinheim (DE)
(86) Internationale Anmeldenummer: PCT/EP2003/014878
(87) Internationale Veröffentlichungsnummer: WO 2004/063239

(56) Entgegenhaltungen:
- EP-A- 0 116 930
- EP-A- 0 945 473
- EP-A- 0 945 501
- US-A- 3 485 762

## Beschreibung

Die vorliegende Erfindung betrifft Copolymere, die durch radikalische Polymerisation von
(A) mindestens einem monoethylenisch ungesättigten C₄-C₈-Dicarbonsäureanhydrid,
(B) mindestens einer vinylaromatischen Verbindung aus der Gruppe Styrol und substituierte Styrole und
(C) mindestens einem monoethylenisch ungesättigten Monomeren, das mindestens ein Heteroatom enthält und von (A) verschieden ist,
   und partielle Veresterung der erhaltenen Copolymere mit
(D) Alkoholalkoxylaten der Formel 1 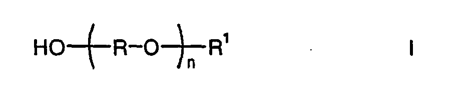
in der die Variablen folgende Bedeutung haben:
- R: C₂-C₆-Alkylenreste, die für n > 1 gleich oder verschieden sein können;
- R¹: C₁-C₃₀-Alkyl;
- n: 1 bis 200,
sowie gewünschtenfalls Hydrolyse der noch in den Copolymeren enthaltenen Anhydridgruppen zu Carboxylgruppen erhältlich sind.

Außerdem betrifft die Erfindung die Verwendung dieser Copolymere als Zusatz zu Wasch- und Reinigungsmitteln, insbesondere als vergrauungsinhibierender sowie waschkraftverstärkender Zusatz in Waschmitteln, sowie feste und flüssige Waschmittel, die die Copolymere als Zusatz enthalten.

Beim Waschprozeß unterscheidet man zwischen Primär- und Sekundärwaschwirkung. Unter Primärwaschwirkung versteht man die eigentliche Schmutzenifernung vom textilen Waschgut. Unter Sekundärwaschwirkung wird die Verhinderung der Effekte verstanden, die durch Wiederablagerung des abgelösten Schmutzes aus der Waschflotte auf das Gewebe zustande kommen. Die Textilien vergrauen zunehmend von Waschgang zu Waschgang, wobei dieser schleichende Vergrauungsprozeß kaum rückgängig gemacht werden kann. Um Textilien aus Baumwolle vor Vergrauung zu schützen, werden dem Waschmittel häufig Natriumsalze der Carboxymethylcellulose (CMC) zugesetzt. Auch Polyacrylsäuren und Acrylsäure-Maleinsäure-Copolymere wirken vergrauungsinhibierend. Die Wirkung der genannten Polymere ist jedoch bei tonhaltigem Schmutz nicht zufriedenstellend.

In den EP-A-945 473 und 945 501 werden Pfropfcopolymere von Styrol, Maleinsäureanhydrid und Polyethylenglykolen beschrieben, die als schmutzabweisender Zusatz in Reinigungsformulierungen bzw. Waschmitteln eingesetzt werden.

Aus der US-A-3 485 762 sind Waschmittelzusammensetzungen bekannt, die Ammoniumsalze eines teilweise mit einem nichtionischen Tensid veresterten Styrol-Maleinsäureanhydrid-Copolymers als Waschkraftverstärker enthalten.

Teilweise mit Polyethylenglykolen veresterte Styrol-Maleinsäureanhydrid-Copolymere sind weiterhin auch aus der EP-A-306 449 bekannt, nach der sie als Zementverflüssiger verwendet werden können.

Der Erfindung lag die Aufgabe zugrunde, polymere Waschmitteladditive zur Verfügung zu stellen, die sich durch insgesamt vorteilhafte Anwendungseigenschaften auszeichnen, vor allem verbesserte Primär- und Sekundärwaschwirkung aufweisen, und sich leicht und stabil in feste und flüssige Waschmittelformulierungen einarbeiten lassen.

Demgemäß wurden Copolymere gefunden, die durch radikalische Polymerisation von
(A) mindestens einem monoethylenisch ungesättigten C₄-C₈-Dicarbonsäureanhydrid,
(B) mindestens einer vinylaromatischen Verbindung aus der Gruppe Styrol und substituierte Styrole und
(C) mindestens einem monoethylenisch ungesättigten Monomeren, das mindestens ein Heteroatom enthält und von (A) verschieden ist,
   und partielle Veresterung der erhaltenen Copolymere mit
(D) Alkoholalkoxylaten der Formel I 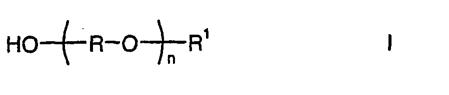
in der die Variablen folgende Bedeutung haben:
- R: C₂-C₆-Alkylenreste, die für n > 1 gleich oder verschieden sein können;
- R¹: C₁-C₃₀-Alkyl;
- n: 1 bis 200,
sowie gewünschtenfalls Hydrolyse der noch in den Copolymeren enthaltenen Anhydridgruppen zu Carboxylgruppen erhältlich sind.

In der Regel weisen die erfindungsgemäßen Copolymere folgende Zusammensetzung auf: Die Molverhältnisse von (B) zu (A) sowie von (C) zu (A) liegen jeweils im Bereich von 0,1 : 1 bis 10 : 1, wobei das Molverhältnis von [(B) + (C)] zu (A) 20 : 1 bis 1 : 2 beträgt.

Dabei ist für das Molverhältnis von (B) zu (A) ein Bereich von 0,2 : 1 bis 5 : 1 bevorzugt und von 0,3 : 1 bis 3 : 1 besonders bevorzugt.

Das Molverhältnis von (C) zu (A) liegt vorzugsweise bei 0,1 : 1 bis 5 : 1, insbesondere bei 0,1: 1 bis 3:1.

Das Molverhältnis von [(B) + (C)] zu (A) beträgt bevorzugt 10:1 bis 1 : 1 und besonders bevorzugt 6 : 1 bis 1 : 1.

Als Monomer (A) werden zur Herstellung der erfindungsgemäßen Copolymere monoethylenisch ungesättigte Dicarbonsäureanhydride mit 4 bis 8 C-Atomen eingesetzt. Als Beispiele seien im einzelnen Maleinsäureanhydrid, Itaconsäureanhydrid, Citraconsäureanhydrid und Methylenmalonsäureanhydrid genannt. Bevorzugt sind dabei Itaconsäureanhydrid und insbesondere Maleinsäureanhydrid.

Als vinylaromatische Monomere (B) kommen Styrol und substituierte Styrole, wie Alkylstyrole, insbesondere C₁-C₄-Alkylstyrole, z.B. Methylstyrole und Ethylstyrole, Styrolsulfonsäuren und deren Salze und halogenierte Styrole, insbesondere Chlorstyrole, zum Einsatz, wobei unsubstituiertes Styrol ganz besonders bevorzugt ist.

Als Monomer (C) sind eine Reihe von monoethylenisch ungesättigten, mindestens ein Heteroatom aufweisenden Verbindungen geeignet. Die Heteroatome, z.B. Stickstoff-oder Sauerstoffatom, können dabei in die Kohlenstoffkette eingebaut sein oder in Form einer funktionellen Gruppe, z.B. einer Carboxyl-, Ester-, Amid- oder Cyanogruppe, vorliegen.

Als Beispiele für besonders geeignete Monomere (C) seien genannt:
- monoethylenisch ungesättigte C₃-C₅-Carbonsäuren, wie Maleinsäure, Fumarsäure, Crotonsäure und insbesondere Acrylsäure und Methacrylsäure;
- C₁-C₂₂-Alkylester von monoethylenisch ungesättigten C₃-C₅-Carbonsäuren, insbesondere (Meth)Acrylsäureester, wie Methyl-, Ethyl-, Propyl-, n-Butyl-, iso-Butyl-, 2-Ethylhexyl-, Decyl-, Lauryl-, iso-Bornyl-, Cetyl-, Palmityl- und Stearyl(meth)acrylat, basische Ester dieser Carbonsäuren, insbesondere Dialkylaminoalkyl(meth)-acrylate, wie Dimethyl- und Diethylaminoethyl(meth)acrylat und Dimethyl- und Diethylaminopropyl(meth)acrylat, sowie deren Salze, und Ester mit Methylpolyalkylenglykolen, wie Methylpolyethylenglykol(meth)acrylate mit einem mittleren Molekulargewicht Mₙ von 200 bis 5000;
- (Meth)Acrylamide, wie (Meth)Acrylamid, N-(C₁-C₁₂-Alkyl)- und N,N-Di(C₁-C₄-alkyl)-(meth)acrylamide, wie N-Methyl-, N,N-Dimethyl-, N-Ethyl-, N-Propy)-; N-tert.-Butyl-, N-tert.-Octyl- und N-Undecyl(meth)acrylamid, deren Ethoxylierungsprodukte, wie Methylpolyethylenglykol(meth)acrylamide mit einem mittleren Molekulargewicht Mₙ von 200 bis 5000, und basische Amide dieser Carbonsäuren, insbesondere N,N-(Di-C₁-C₃-alkyl)amino-C₂-C₆-alkyl(meth)acrylamide, wie Dimethyl- und Diethylaminoethyl(meth)acrylamid und Dimethyl- und Diethylaminopropyl(meth)-acrylamid;
- Vinylester von C₂-C₃₀-, insbesondere C₂-C₁₄-Carbonsäuren, wie Vinylacetat, Vinylpropionat, Vinylbutyrat, Vinyl-2-ethylhexanoat und Vinyllaurat;
- Vinyl-C₁-C₃₀-alkylether, insbesondere Vinyl-C₁-C₁₈-alkylether, wie Vinylmethylether, Vinylethylether, Vinyl-n-propylether, Vinyl-iso-propylether, Vinyl-n-butylether, Vinyl-iso-butylether, Vinyl-2-ethylhexylether und Vinyloctadecylether;
- N-Vinylamide und N-Vinyllactame, wie N-Vinylformamid, N-Vinyl-N-methylformamid, N-Vinylacetamid, N-Vinyl-N-methylacetamid, N-Vinylpyrrolidon, N-Vinylpiperidon und N-Vinylcaprolactam;
- Allylalkoholalkoxylate der Formel H-(O-R')ₘ-O-CH₂-CH=CH₂ (R': lineares oder verzweigtes C₂-C₇-Alkylen, bevorzugt Ethylen oder Propylen; m: 1 bis 500, bevorzugt 2 bis 300);
- vinyl substituierte Stickstoffheterocyclen, wie 1 -Vinylimidazol, 2-Methyl-1 -vinylimidazol, N-Vinyloxazolidon, N-Vinyltriazol, 2-Vinylpyridin, 4-Vinylpyridin, 4-Vinylpyridin-N-oxid, N-Vinylimidazolin und N-Vinyl-2-methylimidazolin;
- Nitrile, wie Acrylnitril und Methacrylnitril.

Bevorzugte Monomere (C) sind Acrylsäure, Methacrylsäure, (Meth)Acrylsäureester und -amide, insbesondere Methylacrylat, Methylmethacrylat und Acrylamid, Vinylalkylether, insbesondere Vinyl-n-butylether und Vinyl-iso-butylether, N-Vinylamide, insbesondere N-Vinylformamid und N-Vinylpyrrolidon, und vinylsubstituierte Stickstoffheterocyclen, insbesondere 1-Vinylimidazol und 4-Vinylpyridin.

Als Veresterungskomponente (D) werden Alkoholalkoxylate der Formel I 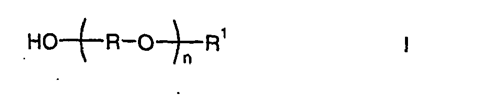 eingesetzt.

R bedeutet dabei lineares oder verzweigtes C₂-C₆-Alkylen, vorzugsweise Ethylen, Propylen oder Butylen. Die Reste R können für n > 1 gleich oder verschieden sein. Verschiedene Reste R können blockweise oder statistisch angeordnet sein.

R¹ steht für lineares oder verzweigtes C₁-C₃₀-Alkyl.

n bedeutet schließlich 1 bis 200, bevorzugt 4 bis 100, besonders bevorzugt 4 bis 50.

Beispiele für besonders geeignete Komponenten (D) sind:
- einseitig mit Methylendgruppen verschlossene Polyethylenglykole der Formel 1, in der n 1 bis 200, bevorzugt 4 bis 100 und besonders bevorzugt 4 bis 50 bedeutet;
- einseitig mit Methylendgruppen verschlossene Blockcopolymere aus Ethylenoxid, Propylenoxid und/oder Butylenoxid mit einem mittleren Molekulargewicht Mₙ von 300 bis 5000;
- einseitig mit Methylendgruppen verschlossene statistische Copolymere aus Ethylenoxid, Propylenoxid und/oder Butylenoxid mit einem Molekulargewicht Mₙ von 300 bis 5000;
- alkoxylierte C₂-C₃₀-Alkohole, insbesondere Fettalkoholalkoxylate, Oxoalkoholalkoxylate oder Guerbet-Alkoholalkoxylate, wobei die Alkoxylierung mit Ethylenoxid, Propylenoxid und/oder Butylenoxid durchgeführt werden kann, z.B.
   C₁₃C₁₅-Oxoalkoholethoxylate mit 3 bis 30 Ethylenoxideinheiten,
   C₁₃-Oxoalkoholethoxylate mit 3 bis 30 Ethylenoxideinheiten,
   C₁₂C₁₄-Fettalkoholethoxylate mit 3 bis 30 Ethylenoxideinheiten,
   C₁₀-Oxoalkoholethoxylate mit 3 bis 30 Ethylenoxideinheiten,
   C₁₀-Guerbetalkoholethoxylate mit 3 bis 30 Ethylenoxideinheiten,
   C₉C₁₁-Oxoalkoholalkoxylate mit 2 bis 20 Ethylenoxideinheiten, 2 bis 20 Propylenoxideinheiten und/oder 1 bis 5 Butylenoxideinheiten,
   C₁₃C₁₅-Oxoalkoholalkoxylate mit 2 bis 20 Ethylenoxideinheiten, 2 bis 20 Propylenoxideinheiten und/oder 1 bis 5 Butylenoxideinheiten,
   C₄C₈-Alkoholethoxylate mit 2 bis 20 Ethylenoxideinheiten.

Die erfindungsgemäßen Copolymere sind partiell mit den Alkoholalkoxylaten I verestert. Im allgemeinen sind 5 bis 80%, bevorzugt 10 bis 65%, besonders bevorzugt 20 bis 50%, der enthaltenen Carboxylgruppen verestert.

Vorzugsweise enthalten-die erfindungsgemäßen Copolymere keine Anhydridgruppen, d.h. nicht veresterte Anhydridgruppen werden zu Carboxylgruppen hydrolysiert. Die Hydrolyse kann mit Wasser oder vor allem mit wäßrigen Basen erfolgen, wodurch die Carboxylgruppen in die entsprechenden Salze überführt werden.

Die K-Werte der erfindungsgemäßen Copolymere betragen üblicherweise 6 bis 200, insbesondere 10 bis 100 (gemessen nach H. Fikentscher bei 25°C in Wasser und einer Polymerkonzentration von 1 Gew.-%).

Die Herstellung der erfindungsgemäßen Copolymere kann durch Lösungspolymerisation, Fällungspolymerisation oder lösungsmittelfrei durch Massepolymerisation der Monomere (A), (B) und (C) und anschließende partielle Veresterung mit (D) sowie gewünschtenfalls Hydrolyse erfolgen.

Als Lösungsmittel kommen dabei polare, gegenüber den Säureanhydriden (A) inerte Lösungsmittel in Betracht, z.B. Aceton, Tetrahydrofuran oder Dioxan. Als Fällungsmittel eignen sich beispielsweise Toluol, Xylol oder aliphatische Kohlenwasserstoffe.

Die Polymerisation erfolgt in der Regel bei Temperaturen von 40 bis 200°C, vorzugsweise 60 bis 150°C, innerhalb von 0,5 bis 12 h, bevorzugt 1 bis 8 h und besonders bevorzugt 1 bis 5 h.

Die Polymerisation wird bei allen Verfahren mit Hilfe von Polymerisationsinitiatoren ausgelöst. Als Polymerisationsinitiatoren kommen dabei sämtliche in Radikale zerfallende Verbindungen in Betracht, z.B. Peroxide, Hydroperoxide, Redoxinitiatoren und Azoverbindungen, wie Di-tert.-butylperoxid, tert.-Butylperoctoat, tert.-Butylperpivalat, tert.-Butylper-2-ethylhexanoat, tert.-Butylpermaleinat, tert.-Butylperisobutyrat, Berizoylperoxid, Diacetylperoxid, Succinylperoxid, p-Chlorbenzoylperoxid, Dicyclohexylperoxiddicarbonat, 2,2'-Azobis(isobutyronitril), 2,2'-Azobis(2-methylpropionamidin)dihydrochlorid und 2,2'-Azobis(4-methoxy-2,4-dimethylvaleronitril). Im allgemeinen werden diese Initiatoren in Mengen von 0,1 bis 20 Gew.-%, vorzugsweise 0,2 bis 15 Gew.-%, bezogen auf das Gewicht der Monomere (A), (B) und (C), eingesetzt.

Die Veresterung der Copolymere mit dem Alkoholalkoxylat (D) kann in inerten Lösungs- oder Quellungsmitteln, wie Aceton, Methylketon, Tetrahydrofuran, Toluol, Xylol oder aliphatischen Kohlenwasserstoffen, oder in Masse durchgeführt werden. Die Menge an (D) wird dabei so gewählt, daß nur eine partielle Veresterung der Copolymere eintritt. Die Veresterung kann durch Zusatz von Katalysatoren, insbesondere sauren Katalysatoren, wie Schwefelsäure, Methansulfonsäure, p-Toluolsulfonsäure, Dodecylbenzolsulfonsäure, Salzsäure oder sauren Ionenaustauschern, beschleunigt werden. Nach der Veresterung werden die Lösungsmittel - sofern sie verwendet werden - aus dem Reaktionsgemisch entfernt. Bei Bedarf werden die erhaltenen partiell veresterten Copolymere in Wasser unter Zusatz von Basen gelöst. Hierbei werden noch vorhandene Anhydridgruppen hydrolysiert und in Carboxylatgruppen überführt. Geeignete Basen sind beispielsweise Natronlauge, Kalilauge, Ammoniak, Amine und Alkanolamine. Der pH-Wert der so erhaltenen Copolymer-Lösungen beträgt im allgemeinen 3 bis 10 und vorzugsweise 5 bis 8.

Besonders vorteilhaft wird das Alkoholalkoxylat (D) selbst als Lösungs- oder Verdünnungsmittel für die Copolymerisation von (A), (B) und (C) verwendet. Nach erfolgter Copolymerisation kann die Umsetzung mit (D) durch Temperaturerhöhung und/oder Zugabe von Katalysatoren gestartet bzw. vervollständigt werden. Die beim Einsatz anderer Lösungsmittel erforderliche Lösungsmittelabtrennung, z.B. durch Abdestillieren, entfällt hierbei. Bei dieser Vorgehensweise können auch zu einem geringen Anteil Pfropfprodukte der Reaktionspartner entstehen.

Es ist auch möglich, die Anhydridgruppen enthaltenden Copolymere zunächst zu hydrolysieren, so daß sämtliche Anhydridgruppen als Carboxylgruppen vorliegen, und dann die Veresterung mit (D) nach bekannten Methoden durchzuführen. Bevorzugt wird jedoch die oben beschriebene Arbeitsweise.

Weiterhin sind die erfindungsgemäßen Copolymere auch dadurch erhältlich, daß man (A) und (D) zunächst zu monoethylenisch ungesättigten Mono- oder Diestem umsetzt und diese dann mit (B) und (C) copolymerisiert, wobei man die Reaktion so führt, daß 5 bis 80% der im erfindungsgemäßen Copolymer enthaltenen Carboxylgruppen verestert vorliegen.

Die erfindungsgemäßen Copolymere eignen sich vorteilhaft als Zusatz für Reinigungsmittel, insbesondere Reinigungsmittel für harte Oberflächen, wie Geschirrspül- und Haushaltsreiniger, und Waschmittel.

Die erfindungsgemäßen Copolymere zeichnen sich dabei insbesondere durch folgende vorteilhafte Anwendungseigenschaften aus, die sie für den Einsatz in Waschmitteln besonders geeignet machen: Sie dispergieren Schmutzpartikel hervorragend und verhindern so während des Waschens eine Wiederablagerung des Schmutzes auf dem Gewebe. Sie beugen damit einer Vergrauung der Textilien vor. Außerdem verbessern sie die Primärwaschkraft sowohl von flüssigen als auch von festen Waschmitteln. Dies gilt besonders für partikuläre Anschmutzungen, aber auch hydrophobe, öl- und fetthaltige Gewebeanschmutzungen werden leichter entfernt. Zudem lassen sie sich problemlos in feste und flüssige Waschmittelformulierungen einarbeiten. Dabei ist hervorzuheben, daß Stabilität und Homogenität der Flüssigwaschmittel durch die erfindungsgemäßen Copolymere nicht beeinträchtigt werden. Unerwünschte Phasenbildungen und Ausfällungen werden auch bei längerer Lagerung nicht beobachtet.

Gegenstand der Erfindung sind demgemäß auch Waschmittelformulierungen, die die erfindungsgemäßen Copolymere als Zusatz enthalten. Die erfindungsgemäßen Copolymere können dabei in Form der freien Säuren oder in partiell oder vollständig neutralisierter Form eingesetzt werden.

Erfindungsgemäße feste Waschmittelformulierungen enthalten insbesondere folgende Komponenten:
a) 0,05 bis 20 Gew.-% mindestens eines erfindungsgemäßen Copolymers,
(b) 0,5 bis 40 Gew.-% mindestens eines nichtionischen, anionischen und/oder kationischen Tensids,
(c) 0,5 bis 50 Gew.-% eines anorganischen Builders,
(d) 0 bis 10 Gew.-% eines organischen Cobuilders und
(e) 0 bis 60 Gew.-% anderer üblicher Inhaltsstoffe, wie Stellmittel, Enzyme, Parfum, Komplexbildner, Korrosionsinhibitoren, Bleichmittel, Bleichaktivatoren, Bleichkatalysatoren, Farbübertragungsinhibitoren, weitere Vergrauungsinhibitoren, Soil-Release-Polyester, Faser- und Farbschutzadditve, Silicone, Farbstoffe, Bakterizide, Auflösungsverbesserer und/oder Sprengmittel,
wobei die Summe der Komponenten (a) bis (e) 100 Gew.-% ergibt.

Die erfindungsgemäßen festen Waschmittelformulierungen können in Pulver-, Granulat-, Extrudat- oder Tablettenform vorliegen.

Erfindungsgemäße flüssige Waschmittelformulierungen haben vorzugsweise folgende Zusammensetzung:
(a) 0,05 bis 20 Gew.-% mindestens eines erfindungsgemäßen Copolymers,
(b) 0,5 bis 40 Gew.-% mindestens eines nichtionischen, anionischen und/oder kationischen Tensids,
(c) 0 bis 20 Gew.-% eines anorganischen Builders,
(d) 0 bis 10 Gew.-% eines organischen Cobuilders,
(e) 0 bis 60 Gew.-% anderer üblicher Inhaltsstoffe, wie Soda, Enzyme, Parfum, Komplexbildner, Korrosionsinhibitoren, Bleichmittel, Bleichaktivatoren, Bleichkatalysatoren, Farbübertragungsinhibitoren, weitere Vergrauungsinhibitoren , Soil-Release-Polyester, Faser- und Farbschutzadditve, Silicone, Farbstoffe, Bakterizide, organische Lösungsmittel, Löslichkeitsvermittler, Hydrotrope, Verdicker und/oder Alkanolamine und
(f) 0 bis 99,45 Gew.-% Wasser.

Als nichtionische Tenside (b) eignen sich dabei vor allem:
- Alkoxylierte C₈-C₂₂-Alkohole, wie Fettalkoholalkoxylate, Oxoalkoholalkoxylate und Guerbet-alkoholethoxylate: Die Alkoxylierung kann mit Ethylenoxid, Propylenoxid und/oder Butylenoxid erfolgen. Es können Blockcopolymerisate oder statistische Copolymere vorliegen. Pro mol Alkohol enthalten sie üblicherweise 2 bis 50 mol, vorzugsweise 3 bis 20 mol, mindestens eines Alkylenoxids. Bevorzugtes Alkylenoxid ist Ethylenoxid. Die Alkohole haben vorzugsweise 10 bis 18 Kohlenstoffatome.
- Alkylphenolalkoxylate, insbesondere Alkylphenolethoxylate, die C₆-C₁₄-Alkylketten und 5 bis 30 mol Alkylenoxid/mol enthalten.
- Alkylpolyglucoside, die C₈-C₂₂-, vorzugsweise C₁₀-C₁₈-Alkylketten und in der Regel 1 bis 20, vorzugsweise 1,1 bis 5, Glucosideinheiten enthalten.
- N-Alkylglucamide, Fettsäureamidalkoxylate, Fettsäurealkanotamidalkoxylate sowie Blockcopolymere aus Ethylenoxid, Propylenoxid und/oder Butylenoxid.

Geeignete anionische Tenside sind beispielsweise:
- Sulfate von (Fett)alkoholen mit 8 bis 22, vorzugsweise 10 bis 18, Kohlenstoffatomen, insbesondere C₉C₁₁-Alkoholsulfate, C₁₂C₁₄-Alkoholsulfate, C₁₂-C₁₈-Alkohol-sulfate, Laurylsulfat, Cetylsulfat, Myristylsulfat, Palmitylsulfat, Stearylsulfat und Talgfettalkoholsulfat.
- Sulfatierte alkoxylierte C₈-C₂₂-Alkohole (Alkylethersulfate): Verbindungen dieser Art werden beispielsweise dadurch hergestellt, daß man zunächst einen C₈-C₂₂-, vorzugsweise einen C₁₀-C₁₈-Alkohol, z.B. einen Fettalkohol, alkoxyliert und das Alkoxylierungsprodukt anschließend sulfatiert. Für die Alkoxylierung verwendet man vorzugsweise Ethylenoxid.
- Lineare C₈-C₂₀-Alkylbenzolsulfonate (LAS), vorzugsweise lineare C₉-C₁₃-Alkylbenzolsulfonate und -Alkyltoluolsulfonate.
- Alkansulfonate, insbesondere C₈-C₂₄-, vorzugsweise C₁₀-C₁₈-Alkansulfonate.
- Seifen, wie die Na- und K-Salze von C₈-C₂₄-Carbonsäuren.

Die anionischen Tenside werden dem Waschmittel vorzugsweise in Form von Salzen zugegeben. Geeignete Kationen sind dabei z.B. Alkalimetallionen, wie Natrium, Kalium und Lithium, und Ammoniumsalze, wie Hydroxyethylammonium-, Di(hydroxyethyl)-ammonium- und Tri(hydroxyethyl)ammoniumsalze.

Als besonders geeignete kationische Tenside seien genannt:
- C₇-C₂₅-Alkylamine;
- N,N-Dimethyl-N-(hydroxy-C₇-C₂₅-alkyl)ammoniumsalze;
- mit Alkylierungsmitteln quatemisierte Mono- und Di-(C₇-C₂₅-alkyl)dimethylammoniumverbindungen;
- Esterquats, insbesondere quaternäre veresterte Mono-, Di- und Trialkanolamine, die mit C₈-C₂₂-Carbonsäuren verestert sind;
- Imidazolinquats, insbesondere 1-Alkylimidazoliniumsalze der Formeln II oder III

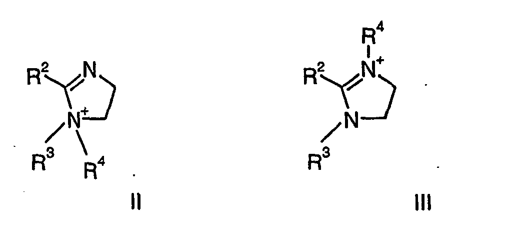

In denen die Variablen folgende Bedeutung haben:
- R²: C₁-C₂₅-Alkyl oder C₂-C₂₅-Alkenyl;
- R³: C₁-C₄-Alkyl oder Hydroxy-C₁-C₄-alkyl;
- R⁴: C₁-C₄-Alkyl, Hydroxy-C₁-C₄-alkyl oder ein Rest R²-(CO)-X-(CH₂)ₚ- (X:-O- oder -NH-;
p: 2 oder 3),
wobei mindestens ein Rest R² C₇-C₂₂-Alkyl ist.

Als anorganische Builder eignen sich insbesondere:
- Kristalline und amorphe Alumosilikate mit ionenaustauschenden Eigenschaften, wie vor allem Zeolithe: Verschiedene Typen von Zeolithen sind geeignet, insbesondere die Zeolithe A, X, B, P, MAP und HS in ihrer Na-Form oder in Formen, in denen Na teilweise gegen andere Kationen wie Li, K, Ca, Mg oder Ammonium ausgetauscht ist.
- Kristalline Silikate, wie insbesondere Disilikate und Schichtsilikate, z.B. δ- und β-Na₂Si₂O₅. Die Silikate können in Form ihrer Alkalimetall-, Erdalkalimetall- oder Ammoniumsalze eingesetzt werden, bevorzugt sind die Na-, Li- und Mg-Silicate.
- Amorphe Silikate, wie Natriummetasilikat und amorphes Disilikat.
- Carbonate und Hydrogencarbonate: Diese können in Form ihrer Alkalimetall-, Erdalkalimetall- oder Ammoniumsalze eingesetzt werden. Bevorzugt sind Na-,Li- und Mg-Carbonate und -Hydrogencarbonate, insbesondere Natriumcarbonat und/oder Natriumhydrogencarbonat.
- Polyphosphate, wie Pentanatriumtriphosphat.

Als organische Cobuilder eignen sich vor allem:
- Niedermolekulare Carbonsäuren, wie Citronensäure, hydrophob modifizierte Citronensäure, z. B. Agaricinsäure, Äpfelsäure, Weinsäure, Gluconsäure, Glutarsäure, Bernsteinsäure, Imidodibernsteinsäure, Oxyddibernsteinsäure, Propantricarbonsäure, Butantetracarbonsäure, Cyclopentantetracarbonsäure, Alkyl- und Alkenylbernsteinsäuren und Aminopolycarbonsäuren, z.B. Nitrilotriessigsäure, β-Alanindiessigsäure, Ethylendiamintetraessigsäure, Serindiessigsäure, Isoserindiessigsäure, N-(2-Hydroxyethyl)iminodiessigsäure, Ethylendiamindibernsteinsäure und Methyl- und Ethylglycindiessigsäure.
- Oligomere und polymere Carbonsäuren, wie Homopolymere von Acrylsäure und Asparaginsäure, Oligomaleinsäuren, Copolymere der Maleinsäure mit Acrylsäure, Methacrylsäure oder C₂-C₂₂-Olefinen, z.B. isobuten oder langkettigen α-Olefinen, Vinyl-C₁-C₈-alkylether, Vinylacetat, Vinylpropionat, (Meth)Acrylsäureester von C₁₋C₈-Alkoholen und Styrol. Bevorzugt sind die Homopolymere der Acrylsäure und Copolymere von Acrylsäure mit Maleinsäure. Die oligomeren und polymeren Carbonsäuren werden in Säureform oder als Natriumsalz eingesetzt.

Geeignete Bleichmittel sind beispielsweise Addukte von Wasserstoffperoxid an anorganische Salze, wie Natriumperborat-Monohydrat, Natriumperborat-Tetrahydrat und Natriumcarbonat-Perhydrat, und Percarbonsäuren, wie Phthalimidopercapronsäure.

Als Bleichaktivatoren eignen sich z.B. N,N,N',N'-Tetraacetylethylendiamin (TAED), Natrium-p-nonanoyloxybenzolsulfonat und N-Methylmorpholiniumacetonitrilmethylsulfat.

Vorzugsweise in Waschmitteln eingesetzte Enzyme sind Proteasen, Lipasen, Amylasen, Cellulasen, Oxidasen und Peroxidasen.

Geeignete Farbübertragungsinhibitoren sind beispielsweise Homo-; Co- und Pfropfpolymere von 1-Vinylpyrrolidon, 1-Vinylimidazol oder 4-Vinylpyridin-N-oxid. Auch mit Chloressigsäure umgesetzte Homo- und Copolymere des 4-Vinylpyridins eignen sich als Farbübertragungsinhibitoren.

Waschmittelinhaltsstoffe sind im übrigen allgemein bekannt. Detaillierte Beschreibungen sind z. B. in den WO-A-99/06524 und 99/04313; in Liquid Detergents, Editor: Kuo-Yann Lai, Surfactant Sci. Ser., Vol. 67, Marcel Decker, New York, 1997, p. 272-304, zu finden.

### Beispiele

### I. Herstellung von erfindungsgemäßen Copolymeren

### Copolymere 1 bis 9

108 g (1,10 mol) Maleinsäureanhydrid (A1) wurden in x₁ g (x₂ mol) des Alkoholalkoxylats (D) gelöst und unter Stickstoff und Rühren auf 90°C erhitzt. Bei dieser Temperatur wurden in 2 h 6 g tert.-Butylperoctoat, gelöst in einen geringen Teilmenge des Alkoholalkoxylats (D), und eine Lösung von y₁ g (y₂ mol) des Monomeren (C) in z₁ g (z₂ mol) Styrol langsam zugetropft.

Das erhaltene Reaktionsgemisch wurde anschließend 4 h bei 150°C gerührt. Das entstandene Öl wurde in 500 g Wasser aufgenommen, und die Lösung wurde mit Natronlauge auf pH 6-7 eingestellt.

Es wurden 30 bis 45 gew.-%ige dünnviskose Polymerlösungen erhalten. Die K-Werte der hergestellten Copolymere wurden nach H. Fikentscher, Cellulose-Chemie, Band 13, 58-64 und 761-774 (1932) in wässriger Lösung bei 25°C und einer Polymerkonzentration von 1 Gew.-% bestimmt.

Weitere Einzelheiten zu diesen Versuchen sowie deren Ergebnisse sind in Tabelle 1 zusammengestellt.

Als Alkoholalkoxylate (D) wurden eingesetzt:
D1: Methylpolyethylenglykol mit einem mittleren Molekulargewicht Mₙ von 500
D2: Methylpolyethylenglykol mit einem mittleren Molekulargewicht Mₙ von 1000
D3: Ethoxylierter C₁₃C₁₅-Oxoalkohol (7 mol EO/mol)

**Tabelle 1**

| Copolymer | x₁ g (x₂ mol) | D | y₁ g (y₂ mol) | Monomer C | z₁ g (z₂ mol) | K-Wert |
|---|---|---|---|---|---|---|
| 1 | 550(1,10) | D1 | 12(0,14) | Acrylsäure | 100(0,96) | 36 |
| 2 | 550 (1,10) | D1 | 11 (0,11) | n-Butylvinylether | 102 (1,00) | 13 |
| 3 | 550 (1,10) | D1 | 50 (0,12) | Allylalkoholethoxylat (10 mol EO/mol) | 102 (1,00) | 20 |
| 4 | 550(1,10) | D1 | 28 (0,28) | Methylmethacrylat | 86(0,84) | 25 |
| 5 | 550 (1,10) | D1 | 12 (0,11) | N-Vinylpyrrolidon | 102 (1,00) | 43 |
| 6 | 550 (0,55) | D2 | 16 (0,22) | Acrylsäure | 92 (0,90) | 51 |
| 7 | 560 (1,10) | D3 | 16 (0,22) | Acrylsäure | 92 (0,90) | 48 |
| 8 | 550(1,10) | D1 | 79 (1,10) | Acrylsäure | 115 (1,12) | 51 |
| 9 | 1100 (1,10) | D2 | 159 (2,20) | Acrylsäure | 229 (2,20) | 43 |

### Copolymere 10 bis 14

### a) Herstellung der Vorprodukte

### a1) Vorprodukt VP1 für Copolymere 10 bis 12:

194 g (2,11 mol) Maleinsäureanhydrid (A1) und 20 g Polyethylvinylether (K-Wert 50, 1 gew.-%ig in Cyclohexan bei 25°C nach H. Fikentscher) wurden in 900 g Xylol gelöst und unter Stickstoff und Rühren auf 140°C erhitzt. Bei dieser Temperatur wurden in 4 h parallel ein Gemisch aus 220 g (2,16 mol) Styrol und 158 g (2,20 mol) Acrylsäure sowie eine Lösung von 4 g Di-tert.-Butylperoxid in 36 g Xylol zugegeben.

Nach einstündigem Nachrühren bei 140°C und Abkühlen auf 50°C wurde das Lösungsmittel im Vakuum entfernt.

Der K-Wert des in Form eines weißen Pulvers vorliegenden Polymers betrug 15,9 (1 gew.-%ig in Cyclohexanon bei 25°C).

### a2) Vorprodukt VP2 für Copolymere 13 und 14:

228 g (2,32 mol) Maleinsäureanhydrid (A1) und 20 g Polyethylvinylether (K-Wert 50, 1 gew.-%ig in Cyclohexan bei 25°C nach H. Fikentscher) wurden in 1100 g Xylol gelöst und unter Stickstoff und Rühren auf 140°C erhitzt. Bei dieser Temperatur wurden in 4 h parallel ein Gemisch aus 230 g (2,25 mol) Styrol und 1300 g (18,06 mol) Acrylsäure sowie eine Lösung von 12 g Di-tert.-Butylperoxid in 140 g Xylol zugegeben.

Nach einstündigem Nachrühren bei 140°C und Abkühlen auf 50°C wurde das Lösungsmittel im Vakuum entfernt.

Der K-Wert des in Form eines weißen Pulvers vorliegenden Polymers betrug 24,2 (1 gew.-%ig in Cyclohexanon bei 25°C).

### b) Umsetzung der Vorprodukte zu den Copolymeren

Zur Herstellung der Copolymere 10 bis 14 wurden jeweils ein Gemisch aus den Vorprodukten VP1 bzw. VP2 und x mol des Alkoholalkoxylats (D) pro mol Maleinsäureanhydrid unter Stickstoff und Rühren auf 170°C erhitzt.

Nach vierstündigem Rühren bei 170°C und Abkühlen auf 50°C wurde das erhaltene Öl mit Natronlauge dispergiert. Das Molverhältnis Natronlauge zu (Maleinsäureanhydrid + Acrylsäure) betrug 0,6 : 1,0, so daß 30 bis 40 gew.%ige Dispersionen der Copolymere mit einem pH-Wert von 6 bis 7 erhalten wurden.

Weitere Einzelheiten zu diesen Versuchen sowie deren Ergebnisse sind in Tabelle 2 zusammengestellt.

Als Alkoholalkoxylate (D) wurden eingesetzt:
D2: Methylpolyethylenglykol mit einem mittleren Molekulargewicht Mₙ von 1000
D3: Ethoxylierter C₁₃C₁₅-Oxoalkohol (7 mol EO/mol)
D4: Statistisches Butylpolyalkylenglykol-Mischpolymerisat (EO : PO im Gewichtsverhältnis 1 : 1) mit einem mittleren Molekulargewicht Mₙ von 1000
D5: C₁₃C₁₅-Oxoalkohol (5 mol PO/mol, 5 mol EO/mol)
D6: C₁₃C₁₅-Oxoalkohol (12 mol EO/mol, 3 mol PO/mol)

**Tabelle 2**

| Copolymer | Vorprodukt | x mol/mol MSA | Alkoholalkoxylat | K-Wert |
|---|---|---|---|---|
| 10 | VP1 | 0,75 | D4 | 32 |
| 11 | VP1 | 0,75 | D5 | 35 |
| 12 | VP1 | 1,0 | D3 | 29 |
| 13 | VP2 | 1,0 | D2 | 43 |
| 14 | VP2 | 1,0 | D6 | 36 |

### 11. Anwendung von erfindungsgemäßen Copolymeren in Waschmitteln

Primär- und Sekundärwaschwirkung der erfindungsgemäßen Copolymere wurde bestimmt.

Für die Waschversuche wurden drei feste Waschmittelformulierungen (WM 1 bis 3) und 2 flüssige Waschmittefformulierungen (WM 4 und 5) verwendet, deren Zusammensetzung in Tabelle 3 wiedergegeben ist. Die Waschbedingungen sind in Tabelle 4 aufgeführt.

**Tabelle 3**

| | WM1 | WM2 | WM3 | WM4 | WM5 |
|---|---|---|---|---|---|
| Inhaltsstoffe | [Gew.-%] | [Gew.-%] | [Gew.-%] | [Gew.-%] | [Gew.-%] |
| lineares Alkylbenzolsulfonat | 5,0 | 0,8 | 7,0 | | |
| C₁₂-C₁₈-Alkylsulfat | | 12,0 | | 26,7 | 6,1 |
| C₁₂-Fettalkoholsulfat x 2 EO | | | | 7,1 | |
| C₁₃C₁₅-Oxoalkohol x 7 EO | 5,0 | 4,7 | 7,0 | | |
| C₁₂C₁₄-Fettalkohot x 7 EO | | | | 6,0 | 26,0 |
| Seife | 1,4 | 0,4 | 0,8 | | |
| Kokosfettsäure | | | | 5,0 | 14,3 |
| Kaliumhydroxid | | | | 1,4 | 5,4 |
| Natriumcitrat x 2 H₂O | | 5,0 | 10,0 | 2,1 | 4,1 |
| Zeolith A | 30,0 | 15,0 | | | |
| Schichtsilikat SKS 6 | | 14,0 | | | |
| Natriumcarbonat | 12,0 | | 20,0 | | 1,4 |
| Natriumhydrogencarbonat | | 9,0 | | | |
| Natriummetasilikat x 5 H₂O | 3,6 | | | | |
| Natriumdisilikat | | | 5,0 | | |
| Dinatriumtetraborat | | | | 2,2 | |
| Natriumperboratmonohydrat | 20,0 | | | | |
| Natriumpercarbonat | | 18,0 | 15,0 | | |
| Tetraacetylethylendiamin | 6,0 | 4,5 | 4,0 | | |
| Methylpropylglykol | | | | 10 | |
| Ethanol | | | | | 2 |
| Natriumsulfat | 7,0 | 3,2 | 25,0 | | |
| Magnesiumsilikat | | 0,8 | | | |
| Wasser | auf 100 | auf 100 | auf 100 | auf 100 | auf 100 |

**Tabelle 4**

| Waschbedingungen | |
|---|---|
| Gerät | Launder-o-meter der Fa. Atlas, Chicago, USA |
| Waschflotte | 250 ml |
| Waschdauer | 30 min bei 40°C |
| Waschmitteldosierung | 4,5 g/l |
| Wasserhärte | 3 mmol/l Ca : Mg : HCO₃ 4 : 1 : 8 |
| Flottenverhältnis | 1:12,5 |
| Waschcyclen | 1 |
| Copolymerzugabe | 2,5 Gew.-%, bezogen auf das jeweilige WM |
| Prüfgewebe | 5,0 g Baumwollgewebe 221 (gebleicht, Flächengewicht 132 g/m²) |
| | 5,0 g Mischgewebe 768 (65:35 PES:BW, gebleicht, Flächengewicht 155 g/m²) |
| Schmutzgewebe | 10 g Baumwollgewebe 290 (Köperware, gebleicht, Flächengewicht 193 g/m²), angeschmutzt mit einer 1:1:1-Mischung aus 3 Tonsorten (Na/AI-Silikatanteil des Schmutzgewebes 4,53 Gew.-%) |
| Tonsorten | Niederahrer rotbrennender Ton 178/RI Hessischer braunbrennender Manganton 262 Gelbbrennender Ton 158/G alle Fa. Jäger KG, Hilgert, Deutschland |

Zur Ermittlung der Primärwaschwirkung wurde der Weißgrad des Schmutzgewebes vor und nach dem Waschen mit einem Photometer der Fa. Datacolor (Elrepho® 2000) anhand der Remission (%) gemessen. Das Primärwaschvermögen ist umso besser, je höher der Remissionswert ist.

Die erhaltenen Ergebnisse sind in Tabelle 5 zusammengestellt.

**Tabelle 5**

| Waschmittel | Zusatz Copolymer (2,5 Gew.-%) | BW 290 |
|---|---|---|
| | | Remission in % |
| | | |
| ungewaschen | | 16,3 |
| | | |
| WM 1 | ohne | 21,9 |
| WM 1 | Copolymer 4 | 24,4 |
| WM 1 | Copolymer 7 | 23,8 |
| WM 1 | Copolymer 12 | 25,0 |
| | | |
| WM 2 | ohne | 22,0 |
| WM 2 | Copolymer 2 | 24,0 |
| WM 2 | Coplymer 5 | 24,9 |
| | | |
| WM 4 | ohne | 21,2 |
| WM 4 | Copolymer 1 | 23,0 |
| WM 4 | Copolymer 4 | 23,5 |
| WM 4 | Copolymer 7 | 22,9 |
| | | |
| WM 5 | ohne | 21,3 |
| WM 5 | Copolymer 2 | 22,8 |
| WM 5 | Copolymer 4 | 23,3 |
| WM 5 | Copolymer 14 | 23,9 |

Zur Ermittlung der Sekundärwaschwirkung wurde die Vergrauung der weißen Prüfgewebe durch Weißgradbestimmung vor und nach der Wäsche mit einem Photometer der Fa. Datacolor (Elrepho 2000) anhand der Remission (%) gemessen. Je höher der Abfall im Weißgrad ist, desto stärker ist die Vergrauung des Gewebes und umgekehrt.

Die erhaltenen Ergebnisse sind in Tabelle 6 zusammengestellt.

**Tabelle 6**

| Waschmittel | Zusatz Copolymer (2,5 Gew.-%) | BW 221 | MG 768 |
|---|---|---|---|
| | | Remission in % | Remission in % |
| | | | |
| ungewaschen | | 83,2 | 84,9 |
| | | | |
| WM 1 | ohne | 55,2 | 55,4 |
| WM 1 | Copolymer 1 | 59,9 | 60,5 |
| WM 1 | Copolymer 4 | 61,0 | 61,9 |
| WM 1 | Copolymer 5 | 60,9 | 61,1 |
| WM 1 | Copolymer 6 | 59,2 | 61,0 |
| WM 1 | Copolymer 8 | 63,1 | 61,8 |
| WM 1 | Copolymer 9 | 62,4 | 61,2 |
| WM 1 | Copolymer 12 | 60,8 | 61,2 |
| | | | |
| WM 2 | ohne | 54,3 | 55,5 |
| WM 2 | Copolymer 1 | 60,5 | 60,6 |
| WM 2 | Copolymer 2 | 60,1 | 59,7 |
| WM 2 | Copolymer 3 | 59,6 | 61,1 |
| WM 2 | Copolymer 10 | 60,7 | 60,2 |
| WM 2 | Copolymer 11 | 59,3 | 58,5 |
| | | | |
| WM 3 | ohne | 51,4 | 52,1 |
| WM 3 | Copolymer 1 | 55,5 | 54,2 |
| WM 3 | Copolymer 8 | 57,5 | 58,1 |
| WM 3 | Copolymer 13 | 56,9 | 56,5 |
| | | | |
| WM 4 | ohne | 48,4 | 54,8 |
| WM 4 | Copolymer 1 | 59,5 | 60,6 |
| WM 4 | Copolymer 4 | 56,6 | 59,3 |
| WM 4 | Copolymer 5 | 58,0 | 60,1 |
| WM 4 | Copolymer 6 | 60,3 | 58,9 |
| WM 4 | Copolymer 8 | 57,4 | 57,4 |
| WM 4 | Copolymer 9 | 58,4 | 56,9 |
| | | | |
| WM 5 | ohne | 53,4 | 46,7 |
| WM 5 | Copolymer 2 | 59,5 | 54,9 |
| Waschmittel | Zusatz Copolymer (2,5 Gew.-%) | BW 221 | MG 768 |
| WM 5 | Copolymer 4 | 59,2 | 58,0 |
| WM 5 | Copolymer 5 | 29,3 | 55,3 |

Zur Beurteilung der Stabilität der Copolymere in unterschiedlichen Flüssigwaschmittelformulierungen wurde jeweils 1 Gew.-% Copolymer in das Flüssigwaschmittel einformuliert und eine visuelle Beurteilung hinsichtlich Phasenseparation, Trübung, Inkompatibilitäten, usw. vorgenommen.

Die Stabilitätstests wurden mit den flüssigen Waschmittelformulierungen WM 4 und 5 durchgeführt.

In Tabelle 7 sind die visuellen Beurteilungen nach 4 Wochen Lagerung bei 40°C zusammengestellt.

**Tabelle 7**

| Copolymer | WM 4 | WM 5 |
|---|---|---|
| ohne | klar | klar |
| Copolymer 2 | klar | klar |
| Copolymer 3 | klar | klar |
| Copolymer 4 | Schlieren | klar |
| Copolymer 5 | klar | klar |
| Copolymer 8 | klar | klar |
| Copolymer 9 | klar | klar |
| Copolymer 13 | klar | klar |

## Patentansprüche

1. Copolymere, erhältlich durch radikalische Polymerisation von
(A) mindestens einem monoethylenisch ungesättigten C₄-C₈-Dicarbonsäureanhydrid,
(B) mindestens einer vinylaromatischen Verbindung aus der Gruppe Styrol und substituierte Styrole und
(C) mindestens einem monoethylenisch ungesättigten Monomeren, das mindestens ein Heteroatom enthält und von (A) verschieden ist,
und partielle Veresterung der erhaltenen Copolymere mit
(D) Alkoholalkoxylaten der Formel I 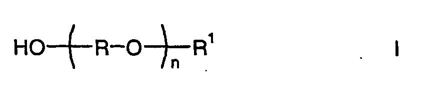
in der die Variablen folgende Bedeutung haben:
R C₂-C₆-Alkylenreste, die für n > 1 gleich oder verschieden sein können;
R¹ C₁-C₃₀-Alkyl;
n 1 bis 200,
sowie gewünschtenfalls Hydrolyse der noch in den Copolymeren enthaltenen Anhydridgruppen zu Carboxylgruppen.

2. Copolymere nach Anspruch 1, bei denen die Molverhältnisse von (B) zu (A) und von (C) zu (A) jeweils im Bereich von 0,1 : 1 bis 10 : 1 liegen und das Molverhältnis von [(B) + (C)] zu (A) 20 : 1 bis 1 : 2 beträgt.

3. Copolymere nach Anspruch 1 oder 2, bei denen 5 bis 80% der enthaltenen Carboxylgruppen verestert sind.

4. Copolymere nach den Ansprüchen 1 bis 3, bei denen die noch enthaltenen Anhydridgruppen zu Carboxylgruppen hydrolysiert sind.

5. Copolymere nach den Ansprüchen 1 bis 4, die als Monomer (A) Maleinsäureanhydrid enthalten.

6. Copolymere nach den Ansprüchen 1 bis 5, die als Monomer (B) Styrol enthalten.

7. Copolymere nach den Ansprüchen 1 bis 6, die als Monomer (C) (Meth)Acrylsäure, (Meth)Acrylsäureester oder -amide, Vinylalkylether, N-Vinylformamid, N-Vinylpyrrolidon, 1-Vinylimidazol oder 4-Vinylpyridin enthalten.

8. Verwendung von Copolymeren gemäß den Ansprüchen 1 bis 7 als Zusatz zu Wasch- und Reinigungsmitteln.

9. Verwendung von Copolymeren gemäß den Ansprüchen 1 bis 7 als vergrauungsinhibierender Zusatz in Waschmitteln.

10. Verwendung von Copolymeren gemäß den Ansprüchen 1 bis 7 als waschkraftverstärkender Zusatz in Waschmitteln.

11. Waschmittelformulierungen, die Copolymere gemäß den Ansprüchen 1 bis 7 als Zusatz enthalten.

12. Feste Waschmittelformulierungen, enthaltend
(a) 0,05 bis 20 Gew.-% mindestens eines Copolymers gemäß den Ansprüchen 1 bis 7,
(b) 0,5 bis 40 Gew.-% mindestens eines nichtionischen, anionischen und/oder kationischen Tensids,
(c) 0,5 bis 50 Gew.-% eines anorganischen Builders,
(d) 0 bis 10 Gew.-% eines organischen Cobuilders und
(e) 0 bis 60 Gew.-% anderer üblicher Inhaltsstoffe, wie Stellmittel, Enzyme, Parfum, Komplexbildner, Korrosionsinhibitoren, Bleichmittel, Bleichaktivatoren, Bleichkatalysatoren, Farbübertragungsinhibitoren, weitere Vergrauungsinhibitoren, Soil-Release-Polyester, Faser- und Farbschutzadditve, Silicone, Farbstoffe, Bakterizide, Auflösungsverbesserer und/oder Sprengmittel,
wobei die Summe der Komponenten (a) bis (e) 100 Gew.-% ergibt.

13. Flüssige Waschmittelformulierungen, enthaltend
(a) 0,05 bis 20 Gew.% mindestens eines Copolymers gemäß den Ansprüchen 1 bis 7,
(b) 0,5 bis 40 Gew.-% mindestens eines nichtionischen, anionischen und/oder kationischen Tensids,
(c) 0 bis 20 Gew.-% eines anorganischen Builders,
(d) 0 bis 10 Gew.-% eines organischen Cobuilders,
(e) 0 bis 60 Gew.-% anderer üblicher Inhaltsstoffe, wie Soda, Enzyme, Parfum, Komplexbildner, Korrosionsinhibitoren, Bleichmittel, Bleichaktivatoren, Bleichkatalysatoren , Farbübertragungsinhibitoren, weitere Vergrauungsinhibitoren, Soil-Release-Polyester, Faser- und Farbschutzadditve, Silicone, Farbstoffe, Bakterizide, organische Lösungsmittel, Löslichkeitsvermittler, Hydrotrope, Verdicker und/oder Alkanolamine und
(f) 0 bis 99,45 Gew.% Wasser.

## Claims

1. A copolymer obtainable by free-radical polymerization of
(A) at least one monoethylenically unsaturated C₄-C₈-dicarboxylic anhydride,
(B) at least one vinylaromatic compound from the group consisting of styrene and substituted styrenes and
(C) at least one monoethylenically unsaturated monomer which comprises at least one heteroatom and is different from (A),
and partial esterification of the resulting copolymer with
(D) alcohol alkoxylates of the formula I 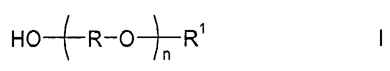
in which the variables have the following meanings:
R is C₂-C₆-alkylene radicals, which, when n is > 1, may be identical or different;
R¹ is C₁-C₃₀-alkyl;
n is 1 to 200,
and if desired hydrolysis of the anhydride groups still present in the copolymer to give carboxyl groups.

2. The copolymer according to claim 1, in which the molar ratios of (B) to (A) and of (C) to (A) are each in the range from 0.1:1 to 10:1 1 and the molar ratio of [(B) + (C)] to (A) is 20:1 to 1:2.

3. The copolymer according to claim 1 or 2, in which 5 to 80% of the carboxyl groups present are esterified.

4. The copolymer according to claims 1 to 3, in which the anhydride groups still present are hydrolyzed to carboxyl groups.

5. The copolymer according to claims 1 to 4, which comprises maleic anhydride as monomer (A).

6. The copolymer according to claims 1 to 5, which comprises styrene as monomer (B).

7. The copolymer according to any of claims 1 to 6, which comprises (meth)acrylic acid, (meth)acrylic esters or amides, vinyl alkyl ethers, N-vinylformamide, N-vinylpyrrolidone, 1-vinylimidazole or 4-vinylpyridine as monomer (C).

8. The use of a copolymer according to any of claims 1 to 7 as additive for detergents and cleaners.

9. The use of a copolymer according to any of claims 1 to 7 as graying-inhibiting additive in detergents.

10. The use of a copolymer according to any of claims 1 to 7 as detergency-boosting additive in detergents.

11. A detergent formulation which comprises a copolymer according to any of claims 1 to 7 as additive.

12. A solid detergent formulation comprising
(a) 0.05 to 20% by weight of at least one copolymer according to any of claims 1 to 7,
(b) 0.5 to 40% by weight of at least one nonionic, anionic and/or cationic surfactant,
(c) 0.5 to 50% by weight of an inorganic builder,
(d) 0 to 10% by weight of an organic cobuilder and
(e) 0 to 60% by weight of other customary ingredients, such as extenders, enzymes, perfume, complexing agents, corrosion inhibitors, bleaches, bleach activators, bleach catalysts, color transfer inhibitors, further graying inhibitors, soil release polyesters, fiber and color protection additives, silicones, dyes, bactericides, dissolution improvers and/or disintegrants, where the sum of components (a) to (e) is 100% by weight.

13. A liquid detergent formulation comprising
(a) 0.05 to 20% by weight of at least one copolymer according to any of claims 1 to 7,
(b) 0.5 to 40% by weight of at least one nonionic, anionic and/or cationic surfactant,
(c) 0 to 20% by weight of an inorganic builder,
(d) 0 to 10% by weight of an organic cobuilder,
(e) 0 to 60% by weight of other customary ingredients, such as sodium carbonate, enzymes, perfume, complexing agents, corrosion inhibitors, bleaches, bleach activators, bleach catalysts, color transfer inhibitors, further graying inhibitors, soil release polyesters, fiber and color protection additives, silicones, dyes, bactericides, organic solvents, solubility promoters, hydrotropes, thickeners and/or alkanolamines and
(f) 0 to 99.45% by weight of water.

## Revendications

1. Copolymères que l'on peut obtenir par polymérisation radicalaire
(A) d'au moins un anhydride d'acide dicarboxylique en C₄-C₈ monoéthyléniquement insaturé,
(B) d'au moins un composé vinyl-aromatique du groupe du styrène et des styrènes substitués, et
(C) d'au moins un monomère monoéthyléniquement insaturé qui contient au moins un hétéroatome et est différent de (A),
et par estérification partielle des copolymères obtenus avec
(D) des alcoxylates d'alcool de la formule 1 : 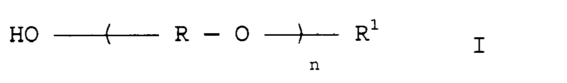
dans laquelle les variables ont la signification suivante:
R représente des radicaux alkylène en C₂-C₆, qui peuvent être identiques ou différents pour n>1,
R¹ représente un groupe alkyle en C₁-C₃₀,
n vaut de 1 à 200,
ainsi qu'éventuellement par hydrolyse des groupes anhydride encore contenus dans les copolymères en groupes carboxyle.

2. Copolymères suivant la revendication 1, dans lesquels les rapports molaires entre (B) et (A) et entre (C) et (A) sont chacun de l'ordre de 0,1:1 à 10:1 et le rapport molaire entre [(B) + (C)] et (A) est de 20:1 à 1:2.

3. Copolymères suivant la revendication 1 ou 2, dans lesquels 5 à 80 % des groupes carboxyle contenus sont estérifiés.

4. Copolymères suivant les revendications 1 à 3, dans lesquels les groupes anhydride encore contenus sont hydrolysés en groupes carboxyle.

5. Copolymères suivant les revendications 1 à 4, qui contiennent de l'anhydride maléique comme monomère (A).

6. Copolymères suivant les revendications 1 à 5, qui contiennent du styrène comme monomère (B).

7. Copolymères suivant les revendications 1 à 6, qui, comme monomère (C), contiennent de l'acide (méth)acrylique, des esters ou amides d'acide (méth)acrylique, des éthers vinylalkyliques, du N-vinylformamide, de la N-vinylpyrrolidone, du 1-vinylimidazole ou de la 4-vinylpyridine.

8. Utilisation de copolymères suivant les revendications 1 à 7, comme additif à des produits de lavage et de nettoyage.

9. Utilisation de copolymères suivant les revendications 1 à 7, comme additif inhibiteur d'un passage au gris dans des produits de lavage.

10. Utilisation de copolymères suivant les revendications 1 à 7, comme additif renforçant le pouvoir de lavage dans des produits de lavage.

11. Formulations de produit de lavage, qui contiennent des copolymères suivant les revendications 1 à 7, comme additifs.

12. Formulations solides de produit de lavage, contenant
(a) 0,05 à 20 % en poids d'au moins un copolymère suivant les revendications 1 à 7,
(b) 0,5 à 40 % en poids d'au moins un agent tensioactif non ionique, anionique et/ou cationique,
(c) 0,5 à 50 % en poids d'un adjuvant inorganique,
(d) 0 à 10 % en poids d'un coadjuvant organique, et
(e) 0 à 60 % en poids d'autres constituants usuels, tels que des agents de fixation, des enzymes, des parfums, des complexants, des inhibiteurs de corrosion, des agents de blanchiment, des activateurs de blanchiment, des catalyseurs de blanchiment, des inhibiteurs de transfert de couleurs, d'autres inhibiteurs de passage au gris, des polyesters antisalissants, des additifs de protection des fibres et des couleurs, des silicones, des colorants, des bactéricides, des agents améliorant la dissolution et/ou des agents de libération,
la somme des composants (a) à (e) donnant 100 % en poids.

13. Formulations liquides de produit de lavage, contenant
(a) 0,05 à 20 % en poids d'au moins un copolymère suivant les revendications 1 à 7,
(b) 0,5 à 40 % en poids d'au moins un agent tensioactif non ionique, anionique et/ou cationique,
(c) 0 à 20 % en poids d'un adjuvant inorganique,
(d) 0 à 10% en poids d'un coadjuvant organique,
(e) 0 à 60 % en poids d'autres constituants usuels, tels que du carbonate de sodium, des enzymes, des parfums, des complexants, des inhibiteurs de corrosion, des agents de blanchiment, des activateurs de blanchiment, des catalyseurs de blanchiment, des inhibiteurs de transfert de couleurs, d'autres inhibiteurs de passage au gris, des polyesters antisalissants, des additifs de protection des fibres et des couleurs, des silicones, des colorants, des bactéricides, des solvants organiques, des tiers-solvants, des hydrotropiques, des agents épaississants et/ou des alcanolamines, et
(f) 0 à 99,45 % en poids d'eau.
